# EUROPEAN PATENT SPECIFICATION

(11) **EP 1 127 898 B1**
(45) Date of publication and mention of the grant of the patent: **19.05.2004**
(21) Application number: 00124088.6
(22) Date of filing: 06.11.2000
(51) Int. Cl.: C08F 20/24, C08F 220/24, D21H 17/33

(54) **Process for production of copolymer composition and water-repellent, oil-repellent agent**
Verfahren zur Herstellung eines Copolymeren sowie hydrophobes und oleophobes Mittel
Procede de preparation d' une composition copolymere et agent hydrofuge et oleofuge

(30) Priority: 22.02.2000 JP 2000050464
(43) Date of publication of application: 29.08.2001
(73) Proprietor: Nicca Chemical Co., Ltd., Fukui-shi, Fukui 910-8670 (JP)
(72) Inventor: Hatanaka, Takahiro, Fukui-shi, Fukui 910-8670 (JP); Ikebata, Kazuhiko, Fukui-shi, Fukui 910-8670 (JP); Midori, Koji, Fukui-shi, Fukui 910-8670 (JP)
(74) Representative: Viering, Jentschura & Partner

(56) References cited:
- EP-A- 0 693 504
- PATENT ABSTRACTS OF JAPAN vol. 018, no. 040 (C-1155), 21 January 1994 (1994-01-21) & JP 05 263070 A (DAIKIN IND LTD), 12 October 1993 (1993-10-12)
- PATENT ABSTRACTS OF JAPAN vol. 009, no. 166 (C-290), 11 July 1985 (1985-07-11) & JP 60 040182 A (ASAHI GLASS KK), 2 March 1985 (1985-03-02)
- [Online] , INTERNET XP002160162 Retrieved from the Internet: <URL: http://chemfinder.com/result.asp> [retrieved on 2001-02-13] reg.nr. 56539-66-3 boiling point 174°C * the whole document *
- PATENT ABSTRACTS OF JAPAN vol. 011, no. 139 (C-420), 7 May 1987 (1987-05-07) & JP 61 276880 A (DAIKIN IND LTD), 6 December 1986 (1986-12-06)

## Description

### BACKGROUND OF THE INVENTION

### 1. Field of the Invention

The present invention relates to a process for the production of a copolymer composition and to a water-repellent, oil-repellent agent. More specifically, the invention relates to a process for the production of a copolymer composition with a high flash point and therefore low risk of fire, which can form stable aqueous dispersions and can provide treated articles with a high degree of water repellency and oil repellency, as well as to a water-repellent, oil-repellent agent containing the copolymer composition.

### 2. Description of the Related Art

water-repellent, oil-repellent agents comprising water dispersions of polymers obtained using (meth)acrylate compounds with fluoroalkyl groups as monomers have been known in the prior art. In order to increase the stability of these water-repellent, oil-repellent agents which are aqueous dispersions, it is necessary to carry out the synthesis by emulsion polymerization using an organic solvent; however, the organic solvent used for this purpose must be a low boiling point solvent such as acetone from the standpoint of compatibility with the monomer, and since the resulting polymer composition therefore has a low flash point, measures must be taken to compensate for this risk.

In order to provide a solution to this problem, Japanese Unexamined Patent Publication No. 60-40182 discloses the use of a saturated polyhydric alcohol as the solvent instead of acetone. However, the aqueous dispersions obtained by this method have insufficient stability and water and oil repellency, while large amounts of the saturated polyhydric alcohol of up to 60-100 wt% with respect to the monomer must be used, thus presenting a disadvantage in terms of cost.

Japanese Unexamined Patent Publication No. 5-263070 also discloses a process for the polymerization of monomers using an organic solvent such as a soluble glycol ether or glycol ester which is soluble in the monomer as the solvent. However, since the typical dipropyleneglycol monomethyl ether used in this process has anesthetic properties, it is necessary to take adequate measures from the standpoint of worker safety and health in order to avoid adverse effects on the human body, and therefore this process has not been widely employed.

### BRIEF SUMMARY OF THE INVENTION

It is an object of the present invention to provide a process for the production of a copolymer composition that has sufficient water and oil repellency, has a low risk of inflammation or the like and is useful as a water-dispersible water-repellent, oil-repellent agent with little adverse effect on the human body or the environment, as well as a water-repellent, oil-repellent agent using the copolymer composition.

As a result of extensive research on this problem, the present inventors have completed the present invention upon finding that the problem can be overcome by using an aqueous liquid containing 3-methyl-3-methoxybutanol as the solvent for emulsion polymerization using the monomers mentioned above.

In other words, the present invention provides a process for the production of a copolymer composition comprising emulsion polymerization of at least one compound selected from the group consisting of acrylates and methacrylates with fluoroalkyl groups and at least one compound selected from the group consisting of fluorine-free monomers that are copolymerizable with acrylates and methacrylates with fluoroalkyl groups, in an aqueous liquid containing 3-methyl-3-methoxybutanol, as well as a water-repellent, oil-repellent agent containing a copolymer composition obtained by this process.

### DETAILED DESCRIPTION OF THE INVENTION

There are no particular restrictions on the acrylate or methacrylate with a fluoroalkyl group used according to the invention, but the fluoroalkyl group is preferably of 3-21 carbons, and more preferably 6-18 carbon atoms. As preferred acrylates and methacrylates with fluoroalkyl groups there may be mentioned the following compounds as examples.
1. CF₃(CF₂)₄CH₂OCOC(CH₃)=CH₂
2. CF₃(CF₂)₇(CH₂)₂OCOC(CH₃)=CH₂
3. CF₃(CF₂)₇(CH₂)₂OCOCH=CH₂
4. (CF₃)₂CF(CF₂)₄(CH₂)₂OCOCH=CH₂
5. CF₃(CF₂)₇SO₂N(C₃H₇)(CH₂)₂OCOCH=CH₂
6. CF₃(CF₂)₇(CH₂)₄OCOCH=CH₂
7. CF₃(CF₂)₇SO₂N(CH₃)(CH₂)₂OCOC(CH₃)=CH₂
8. CF₃(CF₂)₇SO₂N(C₂H₅)(CH₂)₂OCOCH=CH₂
9. CF₃(CF₂)₇CONH(CH₂)₂OCOCH=CH₂
10. (CF₃)₂CF(CF₂)₆(CH₂)₃OCOCH=CH₂
11. (CF₃)₂CF(CF₂)₆CH₂CH(OCOCH₃)OCOC(CH₃)=CH₂
12. (CF₃)₂CF(CF₂)₆CH₂CH(OH)CH₂OCOCH=CH₂
13. CF₃(CF₂)₉(CH₂)₂OCOCH=CH₂
14. CF₃(CF₂)₉(CH₂)₂OCOC(CH₃)=CH₂
15. CF₃(CF₂)₉CONH(CH₂)₂OCOC(CH₃)=CH₂
16. (CF₂Cl)(CF₃)CF(CF₂)₇CONH(CH₂)₂OCOCH=CH₂
17. H(CF₂)₁₀CH₂OCOCH=CH₂
18. (CF₂Cl)(CF₂)₁₀CH₂OCOC(CH₃)=CH₂
19. (CF₂Cl)(CF₃)CF (CF₂)₇(CH₂)₂OCOCH=CH₂

There are no particular restrictions on the fluorine-free monomer that is copolymerizable with the acrylate or methacrylate with a fluoroalkyl group used according to the invention, and as examples there may be mentioned acrylic acid esters and methacrylic acid esters such as lauryl acrylate, lauryl methacrylate, stearyl acrylate, stearyl methacrylate, glycidyl acrylate, glycidyl methacrylate, aziridinyl acrylate, aziridinyl methacrylate, 2-hydroxyethyl acrylate, 2-hydroxyethyl methacrylate, 2-hydroxypropyl acrylate, 2-hydroxypropyl methacrylate, 3-chloro-2-hydroxypropyl methacrylate, benzyl acrylate and benzyl methacrylate; acrylamides and methacrylamides such as acrylamide, methacrylamide, N-methylolacrylamide, N-methylolmethacrylamide, diacetoneacrylamide, diacetonemethacrylamide and methylolated diacetoneacrylamide; as well as maleic acid alkyl esters, phthalic acid alkyl esters, alkylenediol acrylates, alkylenediol dimethacrylate, vinyl chloride, vinylidene chloride, ethylene, vinyl acetate, styrene, α-methylstyrene, β-methylstyrene, vinyl alkyl ethers, halogenated alkyl vinyl ethers, vinyl alkyl ketones, cyclohexyl acrylate, cyclohexyl methacrylate, maleic anhydride, butadiene, isoprene and chloroprene.

The copolymer composition production process of the invention is a process whereby 3-methyl-3-methoxybutanol is added during aqueous emulsification of at least one compound selected from the group consisting of acrylates and methacrylates with fluoroalkyl groups, as exemplified above, and at least one compound selected from the group consisting of fluorine-free monomers that are copolymerizable with these acrylates and methacrylates with fluoroalkyl groups, as exemplified above, and emulsion polymerization is carried out with this aqueous solution to obtain a copolymer composition.

In the copolymer composition production process of the invention, solvents of water-soluble ketones, esters and ethers, which are conventionally used for emulsion polymerization, may be used as other solvents in addition to water and 3-methyl-3-methoxybutanol mentioned above, but the use of such organic solvents brings the risk of a lower flash point and therefore must be limited to a degree which will not interfere with the object of the invention.

As mentioned above, the amount of the organic solvent used for emulsion polymerization according to the prior art should be about 60-100 parts by weight per 100 parts by weight of the total monomers used for the emulsion polymerization. However, because the emulsified dispersion state in the emulsion polymerization is drastically improved by the copolymer composition production process of the invention, the amount of organic solvent used may be greatly reduced, with the emulsion polymerization being conducted at 10-50 parts by weight of organic solvent per 100 parts by weight of the total monomers used for the emulsion polymerization, and the resulting copolymer composition can therefore form a more stable emulsified dispersion. Consequently, concerns about environmental pollution are alleviated when the copolymer composition is used as a water repellent, oil repellent agent.

The proportion of the acrylate or methacrylate with a fluoroalkyl group in the copolymer composition obtained by the production process of the invention is preferably at least 30 parts by weight, and more preferably 40-80 parts by weight, per 100 parts by weight of the total monomers. The proportion of the fluorine-free monomer that is copolymerizable with the acrylate or methacrylate with a fluoroalkyl group is preferably no greater than 70 parts by weight, and preferably 60-20 parts by weight, per 100 parts by weight of the total monomers.

There are no particular restrictions on the surfactant and polymerization initiator used for emulsion polymerization in the copolymer composition production process of the invention, and any surfactants that have conventionally been used for emulsion polymerization may be used, such as nonionic surfactants, anionic surfactants, cationic surfactants and amphoteric surfactants. The polymerization initiator used may be an organic peroxide, azo compound or persulfate compound, or ionizing radiation such as y rays.

The water repellent, oil repellent agent of the invention may be used for treatment of an article according to any appropriately selected method depending on the type of article to be treated. For example, there may be mentioned application of the water repellent, oil repellent agent onto the surface of the article to be treated by immersion, coating or spraying, followed by drying. If necessary, an appropriate crosslinking agent may also be used, with curing carried out to fix it onto the article to be treated.

The water repellent, oil repellent agent of the invention may also, if necessary, be used with other water repellent agents or water repellent, oil repellent agents that have conventionally been used, or it may be used with other functional chemicals as well, such as insecticides, flame retardants, electrostatic agents, dye stabilizers, crease resistant agents and the like.

The articles to be treated with the water repellent, oil repellent agent of the invention are not particularly restricted, and they include a variety of materials. As examples there may be mentioned fiber products, glass, paper, wood, leather, fur, plastic, coated surfaces, plaster and the like. Fiber products include those of natural fibers such as cotton, hemp, wool and silk, synthetic fibers such as polyamide, polyester, polyvinyl alcohol, polyacrylonitrile, polyvinyl chloride, polyethylene, polypropylene and polyurethane, semisynthetic fibers such as rayon, acetate and triacetate, inorganic fibers such as glass fibers, carbon fibers and asbestos fibers, and composite fibers comprising two or more of these different types of fibers. The fiber products may be in the form of fibers, filaments, woven fabrics, knitted fabrics, nonwoven fabrics and the like.

The present invention will now be explained by way of examples which, however, are in no way intended to restrict the invention.

### Example 1

Terpolymer composition of fluoroacrylate, stearyl acrylate and glycidyl methacrylate

After placing 85 g of CₙF₂ₙ₊₁CH₂CH₂COOCH=CH₂ (n = 6, 8, 10, 12, 14: average 8), 60 g of stearyl acrylate, 5 g of glycidyl methacrylate, 240 g of purified water, 50 g of 3-methyl-3-methoxybutanol, 15 g of polyoxyethylene (10 mole) lauryl ether and 6 g of stearyltrimethylammonium chloride in a 500 ml flask, the mixture was stirred at 45°C and an emulsified dispersion was created with ultrasonic waves. After then adding 1.5 g of azobis(isobutylamidine) dihydrochloride, reaction was conducted at 50°C for 4 hours to obtain a copolymer composition.

### Comparative Examples 1-3

A copolymer composition was obtained by the same procedure as Example 1, except that the organic solvents shown in Table 3 were used instead of the 3-methyl-3-methoxybutanol in Example 1.

The copolymer compositions of Example 1 and Comparative Examples 1-3 were evaluated in the following manner.

### Flash point

The flash point of the copolymer composition was measured according to JIS K-2265. The results are shown in Table 3.

### Stability

The stability of the copolymer composition upon storage for 2 weeks at 45°C was evaluated on the following scale. The results are shown in Table 3.
○: No apparent changes
×: Sedimentation and separation in emulsified polymer product

### Sample for water and oil repellency evaluation

A cotton cloth was subjected to padding treatment (50% pickup) with a 2 wt% aqueous liquid of the copolymer composition of Example 1 or Comparative Example 1, 2 or 3, and then dried at 120°C for one minute and heat treated at 160°C for one minute to prepare a sample for evaluation of the water and oil repellency.

### Water repellency

The water repellency was evaluated according to the spray method of JIS L-1092. The evaluation was made on the 5-level scale from 5 to 1 shown in Table 1. The results are shown in Table 3.

**Table 1**

| Water repellency | Condition |
|---|---|
| 5 | No moisture adhesion on surface |
| 4 | Slight moisture adhesion on surface |
| 3 | Partial wetting of surface |
| 2 | Wetting of surface |
| 1 | Wetting of entire surface |

### Oil repellency

A few drops (about 4 mm diameter) of each test liquid shown in Table 2 was placed at two locations on the test fabric, and the state of permeation was judged after 30 seconds (method AATCC-TM118-1966).

The judgment results are shown in Table 3.

**Table 2**

| Oil repellency | Test liquid | Surface tension (dyne/cm 25°C) |
|---|---|---|
| 8 | n-heptane | 20.0 |
| 7 | n-octane | 21.8 |
| 6 | n-decane | 23.5 |
| 5 | n-dodecane | 25.0 |
| 4 | n-tetradecane | 26.7 |
| 3 | n-hexadecane | 27.3 |
| 2 | n-hexadecane/Nujol(35/65) mixture | 29.6 |
| 1 | Nujol | 31.2 |
| 0 | less than 1 | |

"Nujol" in Table 2 is a liquid paraffin.

In Table 3, a mark of "+" for the oil repellency indicates slightly superior performance than the value shown, and a mark of "-" indicates slightly inferior performance than the value shown.

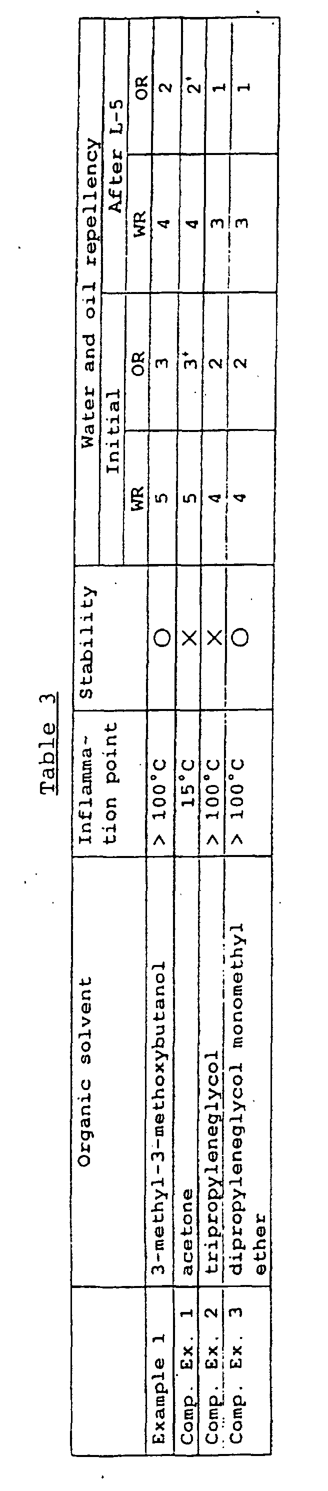

In Table 3, OR indicates oil repellency, WR indicates water repellency and L-5 indicates washing 5 times according to JIS L-0217-103.

### Example 2

Tetrapolymer composition of fluoroacrylate, stearyl acrylate, glycidyl methacrylate and vinyl chloride

After placing 100 g of CₙF₂ₙ₊₁CH₂CH₂COOCH=CH₂ (n = 6, 8, 10, 12, 14: average 8), 15 g of stearyl acrylate, 3 g of glycidyl methacrylate, 250 g of purified water, 50 g of 3-methyl-3-methoxybutanol, 18 g of polyoxyethylene (10 mole) lauryl ether and 4 g of stearyltrimethylammonium chloride in a 500 ml flask, the mixture was stirred at 45°C and an emulsified dispersion was created with ultrasonic waves. The resulting emulsion was charged in a 1000 ml autoclave and 1.5 g of azobis(isobutylamidine) dihydrochloride was added. After sealing the autoclave, 20 g of vinyl chloride was blown in and reaction was conducted at 60°C for 6 hours to obtain a copolymer composition.

### Comparative Examples 4-6

A copolymer composition was obtained by the same procedure as Example 2, except that the organic solvents shown in Table 4 were used instead of the 3-methyl-3-methoxybutanol in Example 2.

The flash point, stability and water and oil repellency of the copolymer compositions of Example 2 and Comparative Examples 4-6 were evaluated in the same manner as above. The results are shown in Table 4. The samples for evaluation of the water and oil repellency were prepared in the following manner.

### Sample for water and oil repellency evaluation

A polyester fabric was subjected to padding treatment (50% pickup) with a 2 wt% aqueous liquid of the copolymer composition of Example 2 or Comparative Example 4, 5 or 6, and then dried at 120°C for one minute and heat treated at 180°C for 30 seconds to prepare a sample for evaluation of the water and oil repellency.

In Table 4, a mark of "+" for the water repellency indicates slightly superior performance than the value shown, and a mark of "-" indicates slightly inferior performance than the value shown.

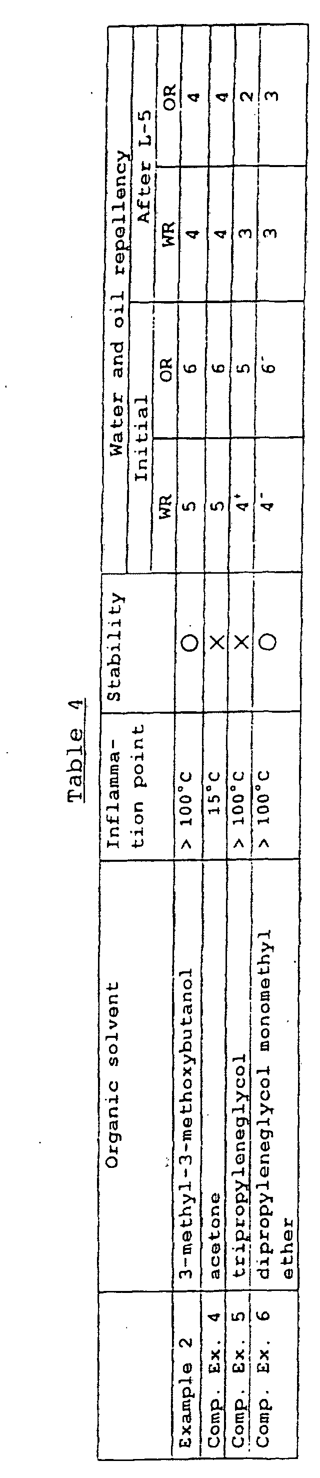

In Table 4, OR indicates oil repellency, WR indicates water repellency and L-5 indicates washing 5 times according to JIS L-0217-103.

According to the present invention it is possible to obtain novel copolymer compositions, the compositions being useful as water-dispersible water repellent, oil repellent agents that exhibit adequate water and oil repellency, low risk of fire, and minimal adverse effects on the human body and environment.

## Claims

1. A process for the production of a copolymer composition comprising emulsion polymerization of at least one compound selected from the group consisting of acrylates and methacrylates with at least one fluoroalkyl group and at least one compound selected from the group consisting of fluorine-free monomers that are copolymerizable with acrylates and methacrylates with at least one fluoroalkyl group, in an aqueous liquid
**characterised in that** the aqueous liquid contains 3-methyl-3-methoxybutanol.

2. A process according to claim 1, wherein the fluoroalkyl group of the acrylate or methacrylate with at least one fluoroalkyl group has 3 to 21 carbon atoms.

3. A process according to claim 1 or 2, wherein the acrylate or methacrylate with at least one fluoroalkyl group is selected from the group consisting of CF₃(CF₂)₄CH₂OCOC(CH₃)=CH₂, CF₃(CF₂)₇(CH₂)₂OCOC(CH₃)=CH₂, CF₃(CF₂)₇(CH₂)₂OCOCH=CH₂, (CF₃)₂CF(CF₂)₄(CH₂)₂OCOCH=CH₂, CF₃(CF₂)₇SO₂N(C₃H₇)(CH₂)₂OCOCH=CH₂, CF₃(CF₂)₇(CH₂)₄OCOCH=CH₂, CF₃(CF₂)₇SO₂N(CH₃)(CH₂)₂OCOC(CH₃)=CH₂, CF₃(CF₂)₇SO₂N(C₂H₅)(CH₂)₂OCOCH=CH₂, CF₃(CF₂)₇CONH(CH₂)₂OCOCH=CH₂, (CF₃)₂CF(CF₂)₆(CH₂)₃OCOCH=CH₂, (CF₃)₂CF(CF₂)₆CH₂CH(OCOCH₃)OCOC (CH₃)=CH₂, (CF₃)₂CF(CF₂)₆CH₂CH(OH)CH₂OCOCH=CH₂, CF₃(CF₂)₉(CH₂)₂OCOCH=CH₂, CF₃(CF₂)₉(CH₂)₂OCOC(CH₃)=CH₂, CF₃(CF₂)₉CONH(CH₂)₂OCOC(CH₃)=CH₂, (CF₂Cl)(CF₃)CF (CF₂)₇CONH(CH₂)₂OCOCH=CH₂, H(CF₂)₁₀CH₂OCOCH=CH₂, (CF₂Cl)(CF₂)₁₀CH₂OCOC(CH₃)=CH₂ and (CF₂Cl)(CF₃)CF(CF₂)₇(CH₂)₂OCOCH=CH₂.

4. A process according to any one of claims 1 - 3, wherein the fluorine-free monomer that is copolymerizable with the acrylate or methacrylate with at least one fluoroalkyl group is selected from the group consisting of acrylic acid esters and methacrylic acid esters including lauryl acrylate, lauryl methacrylate, stearyl acrylate, stearyl methacrylate, glycidyl acrylate, glycidyl methacrylate, aziridinyl acrylate, aziridinyl methacrylate, 2-hydroxyethyl acrylate, 2-hydroxyethyl methacrylate, 2-hydroxypropyl acrylate, 2-hydroxypropyl methacrylate, 3-chloro-2-hydroxypropyl methacrylate, benzyl acrylate and benzyl methacrylate; acrylamides and methacrylamides including acrylamide, methacrylamide, N-methylolacrylamide, N-methylolmethacrylamide, diacetoneacrylamide, diacetonemethacrylamide and methylolated diacetoneacrylamide; as well as maleic acid alkyl esters, phthalic acid alkyl esters, alkylenediol acrylates, alkylenediol dimethacrylate, vinyl chloride, vinylidene chloride, ethylene, vinyl acetate, styrene, α-methylstyrene, β-methylstyrene, vinyl alkyl ethers, halogenated alkyl vinyl ethers, vinyl alkyl ketones, cyclohexyl acrylate, cyclohexyl methacrylate, maleic anhydride, butadiene, isoprene and chloroprene.

5. A water-repellent, oil-repellent agent containing a copolymer composition obtained by the process of claim 1.

## Revendications

1. Procédé de préparation d'une composition de copolymère comprenant une polymérisation d'émulsion d'au moins un composé choisi dans le groupe consistant en des acrylates et des méthacrylates possédant au moins un groupe fluoroalkyle et d'au moins un composé choisi dans le groupe consistant en des monomères sans fluor qui sont copolymérisables avec des acrylates et des méthacrylates possédant au moins un groupe fluoroalkyle, dans un liquide aqueux **caractérisé en ce que** le liquide aqueux contient le 3-méthyl-3-méthoxybutanol.

2. Procédé selon la revendication 1, dans lequel le groupe fluoroalkyle de l'acrylate ou du méthacrylate possédant au moins un groupe fluoroalkyle possède de 3 à 21 atomes de carbone.

3. Procédé selon la revendication 1 ou 2, dans lequel l'acrylate ou le méthacrylate possédant au moins un groupe fluoroalkyle est choisi dans le groupe consistant en CF₃(CF₂)₄CH₂OCOC(CH₃)=CH₂, CF₃(CF₂)₇(CH₂)₂OCOC(CH₃)=CH₂, CF₃(CF₂)₇(CH₂)₂OCOCH=CH₂, (CF₃)₂CF(CF₂)₄(CH₂)₂OCOCH=CH₂, CF₃(CF₂)₇SO₂N(C₃H₇)(CH₂)₂OCOCH=CH₂, CF₃(CF₂)₇(CH₂)₄OCOCH=CH₂, CF₃(CF₂)₇SO₂N(CH₃)(CH₂)₂OCOC(CH₃)=CH₂, CF₃(CF₂)₇SO₂N(C₂H₅)(CH₂)₂OCOCH=CH₂, CF₃(CF₂)₇CONH(CH₂)₂OCOCH=CH₂, (CF₃)₂CF(CF₂)₆(CH₂)₃OCOCH=CH₂, (CF₃)₂CF(CF₂)₆CH₂CH(OCOCH₃)OCOC(CH₃)-CH₂, (CF₃)₂CF(CF₂)₆CH₂CH(OH)CH₂OCOCH=CH₂, CF₃(CF₂)₉(CH₂)₂OCOCH=CH₂, CF₃(CF₂)₉(CH₂)₂OCOC(CH₃)=CH₂, CF₃(CF₂)₉CONH(CH₂)₂OCOC(CH₃)=CH₂, (CF₂Cl)(CF₃)CF(CF₂)₇CONH(CH₂)₂OCOCH=CH₂, H(CF₂)₁₀CH₂OCOCH=CH₂, (CF₂Cl)(CF₂)₁₀CH₂OCOC(CH₃)=CH₂ et (CF₂Cl)(CF₃)CF(CF₂)₇(CH₂)₂OCOCH=CH₂.

4. Procédé selon l'une quelconque des revendications 1 à 3 dans lequel le monomère sans fluor qui est copolymérisable avec l'acrylate ou le méthacrylate possédant au moins un groupe fluoroalkyle est choisi dans le groupe consistant en des esters d'acide acrylique et des esters d'acide méthacrylique comprenant l'acrylate de lauryle, le méthacrylate de lauryle, l'acrylate de stéaryle, le méthacrylate de stéaryle, l'acrylate de glycidyle, le méthacrylate de glycidyle, l'acrylate d'aziridinyle, le méthacrylate d'aziridinyle, l'acrylate de 2-hydroxyéthyle, le méthacrylate de 2-hydroxyéthyle, l'acrylate de 2-hydroxypropyle, le méthacrylate de 2-hydroxypropyle, le méthacrylate de 3-chloro-2-hydroxypropyle, l'acrylate de benzyle et le méthacrylate de benzyle ; des acrylamides et méthacrylamides comprenant l'acrylamide, le méthacrylamide, le N-méthylolacrylamide, le N-méthylolméthacrylamide, le diacétoneacrylamide, le diacétoneméthacrylamide et le diacétoneacrylamide méthylolée ; ainsi que les esters alkyliques d'acide maléique, les esters alkyliques d'acide phtalique, les acrylates d'alkylènediol, le diméthacrylate d'alkylènediol, le chlorure de vinyle, le chlorure de vinylidène, l'éthylène, l'acétate de vinyle, le styrène, l'α-méthylstyrène, β-méthylstyrène, les éthers d'alkyle vinylique, les éthers d'alkyle halogéné vinylique, les cétones d'alkyle vinylique, l'acrylate de cyclohexyle, le méthacrylate de cyclohexyle, l'anhydride maléique, le butadiène, l'isoprène et le chloroprène.

5. Agent hydrofuge, oléofuge contenant une composition de copolymère obtenue selon le procédé de la revendication 1.

## Patentansprüche

1. Ein Verfahren für die Herstellung einer Copolymer-Zusammensetzung, das die Emulsionspolymerisation von wenigstens einer Verbindung, die aus der Gruppe, die aus Acrylaten und Methacrylaten mit wenigstens einer Fluoralkylgruppe besteht, ausgewählt wird, und wenigstens einer Verbindung, die aus der Gruppe, die aus fluorfreien Monomeren, die mit Acrylaten und Methacrylaten mit wenigstens einer Fluoralkylgruppe co-polymerisierbar sind, besteht, ausgewählt wird, in einer wässrigen Flüssigkeit umfasst, **dadurch gekennzeichnet, dass** die wässrige Flüssigkeit 3-Methyl-3-Methoxybutanol enthält.

2. Ein Verfahren gemäß Anspruch 1, wobei die Fluoralkylgruppe des Acrylats oder des Methacrylats mit wenigstens einer Fluoralkylgruppe 3 bis 21 Kohlenstoffatome hat.

3. Ein Verfahren gemäß Anspruch 1 oder 2, wobei das Acrylat oder Methacrylat mit wenigstens einer Fluoralkylgruppe aus der Gruppe, die aus CF₃(CF₂)₄CH₂OCOC(CH₃)=CH₂, CF₃(CF₂)₇(CH₂)₂OCOC(CH₃)=CH₂, CF₃(CF₂)₇(CH₂)₂OCOCH=CH₂, (CF₃)₂CF(CF₂)₄(CH₂)₂OCOCH=CH₂, CF₃(CF₂)₇SO₂N(C₃H₇)(CH₂)₂OCOCH=CH₂, CF₃(CF₂)₇(CH₂)₄OCOCH=CH₂, CF₃(CF₂)₇SO₂N(CH₃)(CH₂)₂OCOC(CH₃)=CH₂, CF₃(CF₂)₇SO₂N(C₂H₅)(CH₂)₂OCOCH=CH₂, CF₃(CF₂)₇CONH(CH₂)₂OCOCH=CH₂, (CF₃)₂CF(CF₂)₆(CH₂)₃OCOCH=CH₂, (CF₃)₂CF(CF₂)₆CH₂CH(OCOCH₃)OCOC (CH₃)=CH₂, (CF₃)₂CF(CF₂)₆CH₂CH(OH) CH₂OCOCH=CH₂, CF₃(CF₂)₉(CH₂)₂OCOCH=CH₂, CF₃(CF₂)₉(CH₂)₂OCOC(CH₃)=CH₂, CF₃(CF₂)₉CONH(CH₂)₂OCOC(CH₃)=CH₂, (CF₂Cl)(CF₃)CF(CF₂)₇CONH(CH₂)₂OCOCH=CH₂, H (CF₂)₁₀CH₂OCOCH=CH₂, (CF₂Cl)(CF₂)₁₀CH₂OCOC(CH₃)=CH₂ und (CF₂Cl)(CF₃)CF(CF₂)₇(CH₂)₂OCOCH=CH₂ besteht, ausgewählt wird.

4. Ein Verfahren gemäß einem der Ansprüche 1-3, wobei das fluorfreie Monomer, das mit dem Acrylat oder dem Methacrylat mit wenigstens einer Fluoralkylgruppe co-polymerisierbar ist, aus der Gruppe, die aus Acrylsäureestern und Methacrylsäureestern, einschließlich Laurylacrylat, Laurylmethacrylat, Stearylacrylat, Stearylmethacrylat, Glycidylacrylat, Glycidylmethacrylat, Aziridinylacrylat, Aziridinylmethacrylat, 2-Hydroxyethylacrylat, 2-Hydroxyethylmethacrylat, 2-Hydroxypropylacrylat, 2-Hydroxypropylmethacrylat, 3-Chloro-2-hydroxypropylmethacrylat, Benzylacrylat und Benzylmethacrylat; Acrylamiden und Methacrylamiden, einschließlich Acrylamid, Methacrylamid, N-Methylolacrylamid, N-Methylolmethacrylamid, Diacetonacrylamid, Diacetonmethacrylamid und methyloliertem Diacetonacrylamid; als auch Maleinsäure-Alkylestern, Phtalsäurealkylestern, Alkylendiolacrylaten, Alkylenedioldimethacrylat, Vinylchlorid, Vinylidenchlorid, Ethylen, Vinylacetat, Styrol, α-Methylstyrol, β-Methylstyrol, Vinylalkylethern, halogenierten Alkylvinylethern, Vinylalkylketonen, Cyclohexylacrylat, Cyclohexylmethacrylat, Maleinanhydrid, Butadien, Isopren und Chloropren besteht, ausgewählt wird.

5. Ein wasserabweisendes, ölabweisendes Agens, das eine über das Verfahren nach Anspruch 1 erhältliche Copolymerzusammensetzung enthält.
